# EUROPEAN PATENT APPLICATION

(11) **EP 4 806 580 A1**
(43) Date of publication of application: **16.09.2026**
(21) Application number: 25757904.5
(22) Date of filing: 14.02.2025
(51) Int. Cl.: B23K 31/00, B23K 9/02, B23K 37/06, B63B 75/00

(54) **WRAPPING WELDING METHOD AND WRAPPED WELD JOINT**

(30) Priority: 19.02.2024 JP 2024022563; 29.03.2024 JP 2024055208
(71) Applicant: JFE Steel Corporation, Tokyo 100-0011 (JP)
(72) Inventor: SAKIMOTO Takahiro, Tokyo 100-0011 (JP); TAKAKI Yoshifumi, Tokyo 100-0011 (JP); UCHIDA Kenji, Tokyo 100-0011 (JP); AKAMAE Akitoshi, Tokyo 100-0011 (JP); UEDA Keiji, Tokyo 100-0011 (JP)
(74) Representative: Haseltine Lake Kempner LLP
(86) International application number: PCT/JP2025/005008
(87) International publication number: WO 2025/177967

(57) **Abstract**

Provided are a boxing welding method and a boxing welded joint. In the boxing welding method according to the present invention, a first weld bead 3a is formed along a short side of a rectangular contact surface 2a where a vertical plate 2 makes contact with a main plate 1 so as to be elongated beyond both sides of the short side of the rectangular contact surface 2a on the main plate **1.** Next, a weld metal retaining member 4 that has a rectangular bottom surface having a bottom surface width M_{T} is placed in contact with the first weld bead 3a on the main plate **1.** Next, a second weld bead 3b and a third weld bead 3c are formed along long sides of the rectangular contact surface 2a so as to cover end portions of the first weld bead 3a and be further elongated along the weld metal retaining member 4 on the main plate 1.

## Description

### Technical Field

The present invention relates to a boxing welding technique for a main plate and a vertical plate, especially a gusset, widely used in construction of a steel structure. More particularly, the present invention relates to a boxing welding method and a boxing welded joint suitable for a steel structure (e.g., a steel bridge, a ship) for which an excellent fatigue property is required.

### Background Art

In general, a steel structure includes a large number of boxing welded joints in which a periphery of a vertical plate (e.g., gusset) is welded to a main plate (boxing welding). In the boxing welded joint, weld beads surround the gusset. In a case where a defect (e.g., cracking) occurs in the weld beads and a shape of a weld toe portion is not smooth, stress concentration is likely to occur in the weld toe portion. As a result, welding residual stress resulting from the boxing welding and repeated stress resulting from external force combine to cause a fatigue crack, and the fatigue crack propagates to cause a fatigue fracture. Note that the external force is a load that externally acts on the steel structure repeatedly. For example, in a case where the steel structure is a steel bridge, the external force is a load repeatedly caused by a natural weather condition (e.g., wind) or passage of vehicles. In a case where the steel structure is a ship, the external force is a load repeatedly caused by wind and waves.

In recent years, fatigue-induced damage has been increasing due to aging of steel structures. To prevent such damage, it is necessary to regularly inspect a steel structure, manage progress of damage, and take measures in accordance with the progress of damage. In view of this, techniques for improving a fatigue property in a boxing welded joint of a steel structure are being considered.

For example, Patent Literature 1 proposes a method for manufacturing a boxing welded joint including performing fillet welding on long sides of a rectangular contact surface where a rib plate (gusset) makes contact with a main plate, cooling the welded joint to room temperature, and then welding a short side of the rectangular contact surface from a corner portion of the rectangular contact surface. According to the technique described in Patent Literature 1, the short side of the rectangular contact surface is welded to a length longer than (rib plate thickness + 2 × fillet welding leg length) by (2 × fillet welding leg length) or longer. This can stably increase joint fatigue strength. However, according to this technique, a weld bead (i.e., a short side weld bead) formed along the short side of the rectangular contact surface covers weld beads (i.e., long side weld beads) formed along the long sides, and the short side weld bead is elongated on the main plate beyond the long side weld beads. In a case where the long side weld beads are welded first and the short side weld bead is welded over the long side weld beads as described above, a gap (i.e., a space surrounded by the main plate, the long side weld bead, and the short side weld bead) is likely to occur in a portion where the weld beads overlap, and a fatigue crack easily occurs due to stress concentration. It is often difficult to prevent propagation of the fatigue crack, and therefore remarkable improvement of fatigue strength of a boxing welded joint cannot be expected according to the technique disclosed in Patent Literature 1.

Patent Literature 2 proposes a boxing welding method. According to the technique described in Patent Literature 2, a first weld bead is formed along a short side of a rectangular contact surface where a gusset makes contact with a main plate so as to be elongated beyond both sides of the short side of the rectangular contact surface on the main plate. Next, a second weld bead and a third weld bead are formed along long sides of the rectangular contact surface so as to cover the first weld bead and be elongated beyond the first weld bead on the main plate. A spacing M between the second weld bead and the third weld bead thus formed is set equal to or less than 10.0 mm. According to Patent Literature 2, this can prevent occurrence of a gap in a portion where the weld beads overlap, thereby preventing occurrence of a fatigue crack irrespective of a shape of a weld toe portion. Furthermore, Patent Literature 2 describes that occurrence of a gap in a portion where the weld beads overlap can be more remarkably prevented by performing welding so that the length of the short side weld bead does not exceed the length of the long side weld beads. Note that, according to Patent Literature 2, the technique described in Patent Literature 2 can use general welding devices and welding materials and can form a boxing welded joint at low cost.

### Citation List

### Patent Literature

PTL 1: Japanese Unexamined Patent Application Publication No. 8-19860
PTL 2: Japanese Unexamined Patent Application Publication No. 2018-158380

### Summary of Invention

### Technical Problem

However, in recent years, further improvement in fatigue strength of a welded structure is required. Furthermore, as described in Patent Literature 1, the method of first welding long side weld beads and then welding a short side weld bead over the long side weld beads has a problem that a gap is likely to occur in a portion where the weld beads overlap and improvement of fatigue strength of a boxing welded joint cannot be expected.

In view of this, an object of the present invention is to propose a boxing welding method and a boxing welded joint that can improve fatigue strength stably at low cost even in a case where a gusset plate thickness is small.

### Solution to Problem

To accomplish the above object, the inventors of the present invention conducted diligent studies on a boxing welding method for forming a boxing welded joint so that a spacing between long side weld beads is stabilized with less variation. As a result, the inventors of the present invention arrived at placing, on a main plate between elongated long side weld beads (i.e., a portion that will form a spacing between the long side weld beads), a weld metal retaining member formed in advance so that a width (i.e., a bottom surface width) M_{T} of a bottom surface thereof that makes contact with the main plate becomes equal to a target spacing between the long side weld beads. By welding the long side weld beads so that the long side weld beads are elongated along the weld metal retaining member, a spacing between the long side weld beads can be made constant stably with respect to the target spacing.

Furthermore, by using a member that is not joined to a weld metal during welding as the weld metal retaining member, the weld metal retaining member can be easily detached after welding, and the spacing between the long side weld beads can be easily adjusted. Here, the "member that is not joined to a weld metal" refers to a member having a sufficient heat capacity to remain unmelted during welding in boxing welding work. Examples of a material suitable for the weld metal retaining member include copper and a ceramic material.

The present invention was accomplished based on such a finding after additional consideration, and the present invention is summarized as follows.
[1] A boxing welding method for boxing welding a vertical plate onto a main plate by using a weld metal retaining member whose bottom surface that makes contact with the main plate is a rectangular bottom surface having a width M_{T}, the boxing welding method including:
   forming a first weld bead along a short side of a rectangular contact surface where the vertical plate makes contact with the main plate so that the first weld bead is elongated beyond both sides of the short side of the rectangular contact surface on the main plate in a straight line parallel with the short side of the rectangular contact surface;
   placing the weld metal retaining member adjacent to the first weld bead on the main plate;
   sequentially forming a second weld bead and a third weld bead along long sides of the rectangular contact surface so that the second weld bead and the third weld bead cover end portions of the first weld bead and are further elongated along the weld metal retaining member on the main plate.
[2] The boxing welding method according to [1], in which
   the second weld bead and the third weld bead are formed so as to satisfy the following expression (1) and the following expression (2): $M \leq Q$ $2.0 \leq M \leq 30.0$
   where Q is a length (mm) of the short side of the rectangular contact surface, and M is a spacing (mm) between the second weld bead and the third weld bead.
[3] The boxing welding method according to [1] or [2], in which
   a spacing N that is a shorter one of a spacing between the short side of the rectangular contact surface and a tip of the second weld bead and a spacing between the short side of the rectangular contact surface and a tip of the third weld bead is equal to or greater than 5.0 mm and equal to or less than 100.0 mm.
[4] The boxing welding method according to any one of [1] to [3], in which
   the weld metal retaining member is a member that is not joined to a weld metal.
[5] The boxing welding method according to [4], in which
   the weld metal retaining member is made of copper or made of a ceramic material.
[6] The boxing welding method according to any one of [1] to [5], in which
   a longitudinal length N_{T} of the weld metal retaining member is 5 mm to 200 mm, and
   a cross section of the weld metal retaining member that is orthogonal to a longitudinal direction has a trapezoidal shape whose bottom surface width M_{T} that is a width of the rectangular bottom surface that makes contact with the main plate is 2.0 mm to 30.0 mm.
[7] The boxing welding method according to any one of [1] to [6], in which
   a region of a side surface of the weld metal retaining member that makes contact with an elongated long side weld bead on a cross section orthogonal to the longitudinal direction is a curved line or a straight line whose elevation angle θ from the rectangular bottom surface is equal to or less than 60°.
[8] A boxing welded joint produced by boxing welding a vertical plate onto a main plate, including:
   a first weld bead formed along a short side of a rectangular contact surface where the vertical plate makes contact with the main plate so as to be elongated beyond both sides of the short side of the rectangular contact surface on the main plate in a straight line parallel with the short side of the rectangular contact surface; and
   a second weld bead and a third weld bead that are elongated long side weld beads formed along long sides of the rectangular contact surface so as to cover end portions of the first weld bead and be elongated on the main plate, in which
   an elevation angle θ from the main plate in regions where the elongated long side weld beads make contact with the main plate is equal to or less than 60° on cross sections of the elongated long side weld beads that are orthogonal to a longitudinal direction.
[9] The boxing welded joint according to [8], in which
   the second weld bead and the third weld bead are formed so as to satisfy the following expression (1) and the following expression (2): $M \leq Q$ $2.0 \leq M \leq 30.0$
   where Q is a length (mm) of the short side of the rectangular contact surface, and M is a spacing (mm) between the second weld bead and the third weld bead.
[10] The boxing welded joint according to [8] or [9], in which
   a spacing N that is a shorter one of a spacing between the short side of the rectangular contact surface and a tip of the second weld bead and a spacing between the short side of the rectangular contact surface and a tip of the third weld bead is equal to or greater than 5.0 mm and equal to or less than 100.0 mm.

### Advantageous Effects of Invention

According to the present invention, a welding defect of a boxing welded joint can be avoided, and a spacing between elongated long side weld beads can be adjusted to be constant. As a result, even in a case where a plate thickness of a vertical plate, especially a gusset is small (e.g., 2 mm to 30 mm), especially fatigue strength of the boxing welded joint can be improved at low cost stably, and thus a remarkable effect in industry can be produced. Note that the present invention also produces an effect of being applicable not only to a case where a steel structure is newly constructed, but also to a case where an aging steel structure is repaired.

### Brief Description of Drawings

[Fig. 1] Fig. 1 is an explanatory view (plan view) schematically illustrating a procedure of a boxing welding method according to the present invention.
[Fig. 2] Fig. 2 is a plan view schematically illustrating an example of weld beads formed by the boxing welding method according to the present invention.
[Fig. 3] Fig. 3(a) to Fig. 3(c) are perspective views schematically illustrating an example of an external shape of a weld metal retaining member according to the present invention.
[Fig. 4] Fig. 4 is a cross-sectional view schematically illustrating a relationship between elongated weld beads and the weld metal retaining member after boxing welding according to the present invention.
[Fig. 5] Fig. 5 is a plan view illustrating a shape of a test specimen for a fatigue test of a boxing welded joint used in Example according to the present invention. Description of Embodiments

The present invention relates to a boxing welding method for boxing welding a gusset 2, which is a vertical plate, onto a main plate 1 by using a weld metal retaining member 4. Furthermore, the present invention relates to a boxing welded joint obtained by this boxing welding method.

In the present invention, a steel material that can be applied to the main plate 1 and the gusset 2 is not limited in particular, and the effects of the present invention can be produced irrespective of steel grade. Any of SM400, SM490, SM520, and SM570, and the like having a yield strength of 245 MPa to 560 MPa is suitable for a steel welded structure. Note that it is preferable to apply a steel material having a plate thickness of 2 mm to 30 mm to the gusset 2, which is a vertical plate, although a plate thickness of the main plate 1 is not limited in particular. In a case where the plate thickness of the gusset 2 is less than 2 mm, welding work is difficult. On the other hand, in a case where the plate thickness is greater than 30 mm, such a plate thickness is disadvantageous from the perspective of the effect of improving a fatigue property.

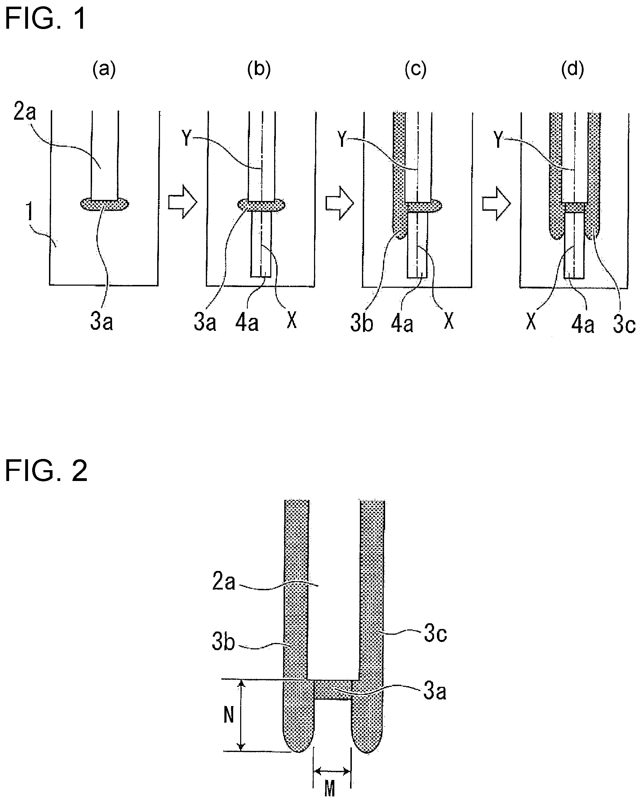

Next, a procedure of the boxing welding method according to the present invention for obtaining a boxing welded joint is described with reference to Fig. 1. A rectangular contact surface 2a where the gusset 2 makes contact with the main plate 1 matches a shape of a rectangular line obtained by projecting the gusset 2 onto the main plate 1. In the following description, it is assumed that the shape of the rectangular line is the rectangular contact surface 2a.

In the example illustrated in Fig. 1, the gusset 2 is placed on an upper surface of the main plate 1 as a preparation step before a boxing welding step. Next, the boxing welding step described below is performed to produce a welded joint having weld beads as illustrated in Fig. 2. Note that Fig. 1 mainly illustrates the gusset 2 on one side of the main plate 1 and surroundings thereof.

First, a first weld bead 3a (hereinafter also referred to as a short side weld bead) is formed along a short side of the rectangular contact surface 2a. In this step, the first weld bead 3a is welded so as to be elongated beyond both ends of the short side of the rectangular contact surface 2a on the main plate 1, as illustrated in Fig. 1(a). Accordingly, the first weld bead 3a is longer than the short side of the rectangular contact surface 2a. This makes it possible to cover end portions of the first weld bead 3a with a second weld bead 3b and a third weld bead 3c (hereinafter also referred to as long side weld beads) to be formed later. This can melt the end portions of the first weld bead 3a. Note that in a case where the first weld bead 3a is too long, the end portions of the first weld bead 3a cannot be completely covered with the second weld bead 3b and the third weld bead 3c to be formed later. In this case, a gap surrounded by the main plate 1, the first weld bead 3a, and the second weld bead 3b or a gap surrounded by the main plate 1, the first weld bead 3a, and the third weld bead 3c is likely to occur, and as a result, a fatigue crack is likely to occur. For this reason, it is preferable to adjust the length of the first weld bead 3a in advance in consideration of widths of the long side weld beads so that the first weld bead 3a can be covered with the second weld bead 3b and the third weld bead 3c to be formed later.

Next, the weld metal retaining member 4 is placed adjacent to the first weld bead 3a on the main plate 1 (see Fig. 1(b)). In the present invention, a bottom surface of the weld metal retaining member 4 that makes contact with the main plate 1 is referred to as a rectangular bottom surface 4a. Preferably, a width center line X of the rectangular bottom surface 4a that makes contact with the main plate 1 is aligned with a plate thickness center line Y of the gusset. Here, an error up to 2 mm is allowed. A structure of the weld metal retaining member 4 will be described later. In Fig. 1, in order to facilitate understanding of a relationship with the weld beads and others, a position where the weld metal retaining member 4 is placed is illustrated by using a shape of the rectangular bottom surface 4a where the weld metal retaining member bottom surface makes contact with the main plate 1.

Next, as illustrated in Fig. 1(c), the second weld bead 3b is formed along a long side of the rectangular contact surface 2a so as to cover an end portion of the first weld bead 3a and be further elongated on the main plate 1. Beyond the gusset 2, the second weld bead 3b is elongated along a long side of the rectangular bottom surface 4a of the weld metal retaining member 4 placed in advance.

Next, as illustrated in Fig. 1(d), the third weld bead 3c is formed along a long side of the rectangular contact surface 2a so as to cover an end portion of the first weld bead 3a and be further elongated on the main plate 1. Beyond the gusset 2, the third weld bead 3c is elongated along a long side of the rectangular bottom surface 4a of the weld metal retaining member 4 placed in advance. Note that although the second weld bead 3b is located on a left side relative to the rectangular contact surface 2a and the third weld bead 3c is located on a right side relative to the rectangular contact surface 2a in Fig. 1, the positions of the second weld bead 3b and the third weld bead 3c may be reversed.

By thus performing welding in the order of (a) to (d), the first to third weld beads 3a to 3c can be formed along the rectangular contact surface 2a of the gusset 2. Note that the weld beads need just be formed around the gusset on an opposite side by a similar procedure although illustration thereof is omitted in Fig. 1. Note that the weld metal retaining member 4 is detached after the end of the welding.

Fig. 2 illustrates an example in which the weld beads have been formed by the above procedure.

The second weld bead 3b and the third weld bead 3c are formed so as to satisfy the following expressions (1) and (2): $M \leq Q$ $2.0 \leq M \leq 30.0$ where Q is a length (mm) of the short side of the rectangular contact surface 2a, and M is a spacing (mm) between the second weld bead 3b and the third weld bead 3c that are elongated on the main plate. The spacing M is a spacing (unit: mm) between the second weld bead 3b and the third weld bead 3c that are elongated on the main plate 1 (i.e., an internal distance between weld bead toe portions of the second weld bead 3b and the third weld bead 3c). The internal distance between the weld bead toe portions of the second and third weld beads is an actual value (i.e., actual measured value). This substantially coincides with a width M_{T} of the rectangular bottom surface 4a of the weld metal retaining member.

In the present invention, the spacing M is preferably equal to or greater than 2.0 mm and equal to or less than 30.0 mm so that the expression (2) is satisfied.

In a case where the distance (i.e., the spacing M) between the second weld bead 3b and the third weld bead 3c that are elongated on the main plate 1 is greater than 30.0 mm, an effect of suppressing stress flowing to a weld toe portion of the first weld bead 3a by the second weld bead 3b and the third weld bead 3c is low. Due to this, an effect of reducing stress concentration starts to decrease. This lowers an effect of improving fatigue strength. On the other hand, in a case where the spacing M is less than 2.0 mm, the second weld bead 3b and the third weld bead 3c make contact with each other, and actual welding work cannot be performed. The spacing M is more preferably equal to or greater than 5.0 mm and more preferably equal to or less than 25.0 mm.

Note that the spacing M (mm) is preferably set equal to or less than the length (Q) (unit: mm) of the short side of the rectangular contact surface 2a of the gusset 2 so that the expression (1) is satisfied in addition to the expression (2). In a case where the spacing M (mm) is greater than the length Q (mm) of the short side of the rectangular contact surface 2a of the gusset 2, stress is likely to flow to the gusset weld toe portion, leading to a concern that a fatigue crack is likely to occur. The "gusset weld toe portion" refers to the weld toe portion of the first weld bead 3.

As illustrated in Fig. 2, a shorter one of a spacing between the short side of the rectangular contact surface 2a and a tip of the second weld bead 3b and a spacing between the short side of the rectangular contact surface 2a and a tip of the third weld bead 3c is referred to as a spacing N. The "spacing between the short side of the rectangular contact surface 2a and the tip of the second weld bead 3b (or the third weld bead 3c)" refers to a spacing (i.e., a length) from an end portion of the rectangular contact surface 2a to the tip of the second weld bead 3b (or the third weld bead 3c). The spacing N between the rectangular contact surface 2a and the tip of the second or third weld bead is an actual value (actual measured value). The spacing N is preferably equal to or greater than 5.0 mm. In a case where the spacing N is less than 5.0 mm, the length of the elongated second weld bead or the elongated third weld bead is too short, and therefore a fatigue crack easily propagates. The spacing N is more preferably equal to or greater than 10.0 mm, still more preferably equal to or greater than 15.0 mm. On the other hand, in a case where the spacing N is too long, it takes a long time to perform welding work. Therefore, the spacing N is preferably equal to or less than 100.0 mm. The spacing N is more preferably equal to or less than 50.0 mm, still more preferably equal to or less than 30.0 mm.

Note that a means of welding used in the boxing welding method according to the present invention is preferably a shielded metal arc welding method or a gas metal arc welding method, but other welding methods may be used as appropriate. Either manual welding or automatic welding may be adopted.

Next, the weld metal retaining member 4 used in the present invention is described.

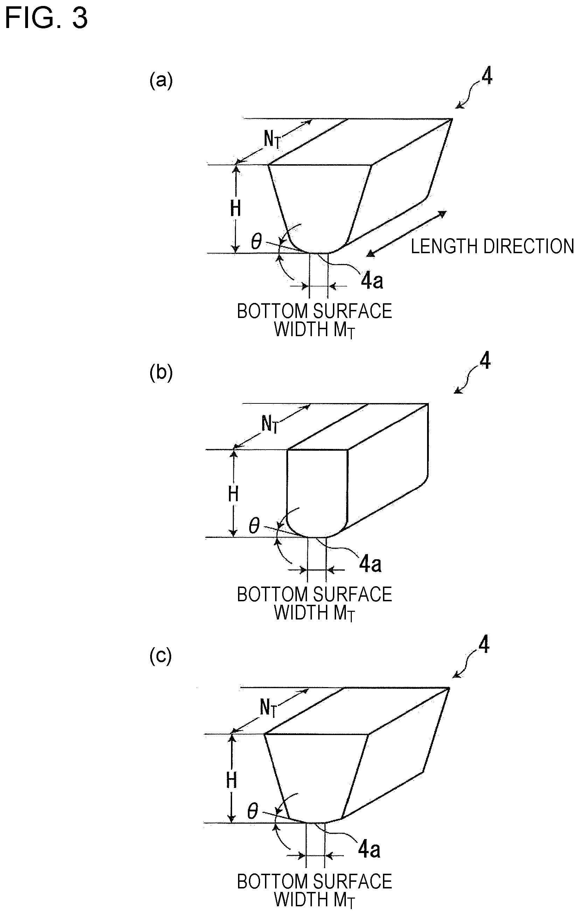

Fig. 3 illustrates an example of an external shape of the weld metal retaining member 4.

The weld metal retaining member 4 used in the present invention is formed so that the width (i.e., bottom surface width) M_{T} of the rectangular bottom surface 4a that makes contact with the main plate 1 becomes equal to a target value (hereinafter also referred to as a target spacing) of the spacing M between the elongated second weld bead 3b and the elongated third weld bead 3c. This makes it possible to form the weld metal retaining member 4 so that the actual measured value of the spacing M between the elongated second weld bead 3b and the elongated third weld bead 3c stably becomes the target spacing.

It is preferable that a longitudinal length N_{T} of the weld metal retaining member 4 used in the present invention be equal to or greater than 5 mm, the width (i.e., bottom surface width) M_{T} of the bottom surface 4a that makes contact with the main plate 1 be 2.0 mm to 30.0 mm, and a cross section of the weld metal retaining member 4 that is orthogonal to a longitudinal direction (i.e., length direction) have a substantially trapezoidal shape, as illustrated in Fig. 3(a). Note that the cross section may have a substantially rectangular shape, as illustrated in Fig. 3(b).

In a case where the longitudinal length N_{T} of the weld metal retaining member 4 is less than 5 mm, the spacing N is less than 5.0 mm in the produced joint, and a fatigue crack easily propagates because the length of the elongated second weld bead or the elongated third weld bead is too short. Note that a reason why the bottom surface width M_{T} is set to the above numerical range is similar to that for the spacing M, and therefore description thereof is omitted.

The longitudinal length N_{T} of the weld metal retaining member 4 is a length that corresponds to the lengths of the second weld bead 3b and the third weld bead 3c that are elongated on the main plate 1. The longitudinal length N_{T} is preferably equal to or greater than 5 mm and equal to or less than 200 mm and is preferably set greater than the target spacing N. The "target spacing N" means a target value of the lengths of the second weld bead 3b and the third weld bead 3c that are elongated on the main plate 1 (i.e., the spacing N between the rectangular contact surface 2a and the tip of the second or third weld bead). Furthermore, the width (i.e., the bottom surface width) M_{T} of the rectangular bottom surface 4a that makes contact with the main plate 1 is set for each welding work within a range of 2.0 mm to 30.0 mm so as to match the target spacing between the second weld bead 3b and the third weld bead 3c that are elongated.

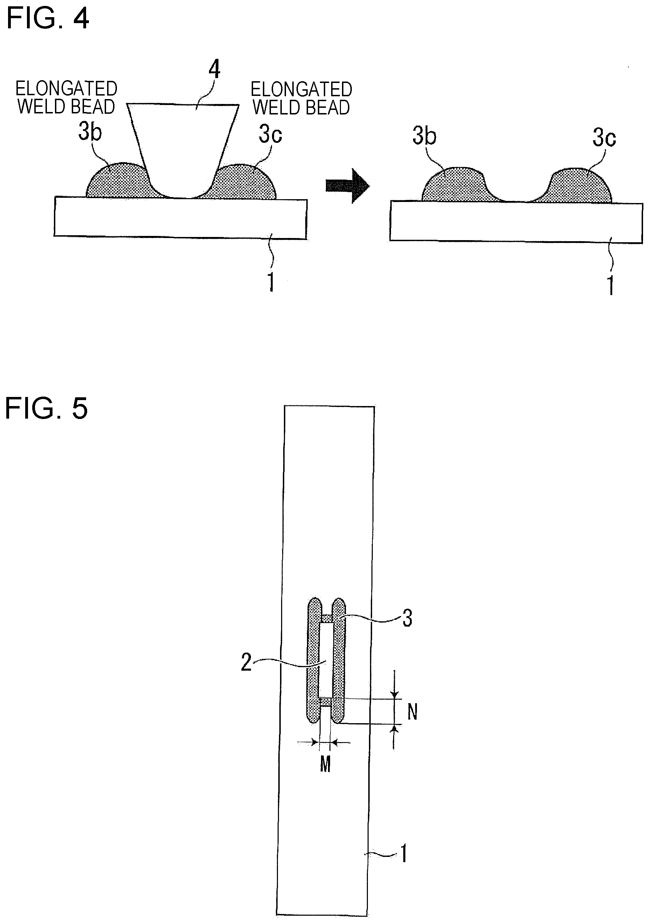

As illustrated in Fig. 3(a) and 3(b), the weld metal retaining member 4 used in the present invention is preferably formed so that a region of a side surface of the weld metal retaining member 4 that makes contact with the elongated weld bead on a cross section orthogonal to the longitudinal direction is a curved line (specifically, an arc) whose elevation angle θ from the bottom surface 4a is equal to or less than 60°. Note that instead of the curved line, the region may be a straight line whose elevation angle θ from the bottom surface 4a is equal to or less than 60°, as illustrated in Fig. 3(c). By employing such a curved line or straight line, the bead shape of the elongated weld beads tends to become a shape close to a semi-ellipsoid whose elevation angle θ is equal to or less than 60°, as illustrated in Fig. 4. This can reduce or avoid stress concentration at the elongated weld beads. Note that θ is more preferably equal to or greater than 0° and equal to or less than 45°. Note that in a case where the elevation angle θ from the bottom surface 4a is greater than 60°, an amount of fused weld metal increases, and therefore the bead shape is less likely to become a shape close to a desired semi-ellipsoid. A shape of an upper surface of the weld metal retaining member 4 need not be flat.

The cross-sectional shapes illustrated in Fig. 3(a) and 3(c) are referred to as a trapezoidal shape, and the cross-sectional shape illustrated in Fig. 3(b) is referred to as a rectangular shape. The trapezoidal shape includes, for example, a shape in which one or both of two opposing sides has an arc shape, as illustrated in Fig. 3(a). Furthermore, the trapezoidal shape includes, for example, a shape in which one of two opposing sides that has the bottom surface width M_{T} has a straight line that connects an end of the bottom surface width M_{T} and a corner of the trapezoid, as illustrated in Fig. 3(c).

The elongated weld beads are parts of the second weld bead and the third weld bead and are weld bead parts elongated beyond the gusset 2 on the main plate.

Note that a height H of the weld metal retaining member 4 is not limited in particular and is determined as appropriate from the perspective of ease of handling, and is preferably 30 mm to 100 mm.

The weld metal retaining member 4 is preferably a member that is not joined to a weld metal. By using a member that is not joined to a weld metal as the weld metal retaining member 4, the weld metal retaining member 4 can be easily detached from an installation position after the end of welding. Such a member is, for example, made of copper or a ceramic material. Note that examples of the ceramic material include SiO₂ and Al₂O₃.

Next, an example of a boxing welded joint obtained by the boxing welding method according to the present invention is described.

Note that description of the shapes, effects, and others of the main plate 1, the gusset 2, which is a vertical plate, the weld beads 3, and the weld metal retaining member 4 have been given in detail in the section related to the boxing welding method and is therefore omitted here.

The boxing welded joint according to the present invention includes the main plate 1, the gusset 2 on the main plate, and the weld beads 3 that join the main plate and the gusset. As illustrated in Fig. 2, the weld beads 3 include the first weld bead 3a, the second weld bead 3b, and the third weld bead 3c.

In the present invention, the second and third weld beads 3b and 3c are formed after the first weld bead 3a is formed and the weld metal retaining member 4 is placed adjacent to the first weld bead 3a, as described above. The weld metal retaining member 4 has a curved line or a straight line whose elevation angle θ from the bottom surface 4a is equal to or less than 60°. Accordingly, the elongated weld bead parts of the second weld bead 3b and the third weld bead 3c of the obtained welded joint have a cross section as illustrated in Fig. 4. That is, the elongated weld beads in the welded joint have a bead shape close to a semi-ellipsoid whose elevation angle θ is equal to or less than 60°.

The boxing welded joint according to the present invention is preferably formed so that the second weld bead 3b and the third weld bead 3c satisfy the above expressions (1) and (2). Furthermore, preferably, the spacing N that is a shorter one of the spacing between the short side of the rectangular contact surface 2a and the tip of the second weld bead 3b and the spacing between the short side of the rectangular contact surface 2a and the tip of the third weld bead 3c is equal to or greater than 5.0 mm and equal to or less than 100.0 mm. Note that the elongated weld bead spacing M and the elongated weld bead length N of the welded joint were measured by a vernier caliper.

According to the boxing welded joint according to the present invention having such a configuration, the spacing M between the elongated weld beads on the main plate is stably made constant, and therefore fatigue strength of the boxing welded joint can be improved in particular.

The present invention is further described on the basis of Example.

### EXAMPLE

A steel plate A having a chemical composition and mechanical properties shown in Table 1 was prepared. A plate thickness of the steel plate A is 14 mm. The steel plate A is a steel plate having such a fatigue property that when a stress intensity factor ΔK is 15 MPam^{1/2}, a fatigue crack propagation rate is 1.85 × 10⁻⁸ m/cycle.

**[Table 1]**

| Steel plate No. | Chemical composition (mass %) | | | | | Plate thickness (mm) | Mechanical properties | |
|---|---|---|---|---|---|---|---|---|
| | C | Si | Mn | P | S | | Yield strength (MPa) | Tensile strength (MPa) |
| A | 0.16 | 0.23 | 0.70 | 0.02 | 0.01 | 14 | 320 | 463 |

The main plate 1 (plate thickness: 14 mm, plate width: 80 mm, length: 500 mm) and the gusset 2 (plate thickness: 4 mm to 14 mm, plate width: 75 mm, height: 50 mm), which is a vertical plate, were obtained from the prepared steel plate A. Note that the gusset 2 obtained from the prepared steel plate A was used after processing the gusset 2 so that the plate thickness Q became 4.0 mm to 14.0 mm. The plate thickness Q means "the length of the short side of the rectangular contact surface 2a of the gusset 2".

The gusset 2 was placed at a central position of the main plate 1. The plate thickness Q of the used gusset 2 is shown in Table 2. Next, the boxing welded joint as illustrated in Fig. 5 was produced by boxing welding the gusset 2 onto the main plate 1 by a gas metal arc welding method using a flux-cored wire. MX-Z200 (wire diameter: 1.2 mm) produced by Kobe Steel, Ltd. was used as the flux-cored wire, and the welding was performed on welding conditions of 240 A-32 V. Note that both the short side weld bead and the long side weld beads were welded aiming for a leg length of approximately 6 mm.

A procedure of the boxing welding is described below.

First, the first weld bead 3a, which is a short side weld bead, was formed along the short side of the rectangular contact surface 2a of the gusset 2. The first weld bead 3a was welded so as to be elongated beyond both sides of the short side of the rectangular contact surface 2a on the main plate 1, as illustrated in Fig. 1(a). Note that the elongated length of the first weld bead 3a was set to such a length that the first weld bead 3a can be covered with the second weld bead 3b and the third weld bead 3c, which are the long side weld beads.

Next, the weld metal retaining member 4 having the trapezoidal shape illustrated in Fig. 3(a) was placed in contact with the first weld bead 3a on the main plate 1 so that the center line X of the rectangular bottom surface 4a in the width direction was aligned with the center line Y of the plate thickness Q of the gusset 2 (see Fig. 1(b)). Note that the used weld metal retaining member 4 was processed into predetermined dimensions by using FB-B3 produced by Kobe Steel, Ltd. The dimensions (i.e., M_{T}, N_{T}, and θ) of the weld metal retaining member 4 are also listed in Table 2.

Next, the second weld bead 3b was formed along the long side of the rectangular contact surface 2a so as to cover an end portion of the first weld bead 3a and be further elongated on the main plate 1, as illustrated in Fig. 1(c). Beyond the gusset 2, the second weld bead 3b was elongated along the weld metal retaining member 4 placed in advance.

Next, the third weld bead 3c was formed along the long side of the rectangular contact surface 2a so as to cover an end portion of the first weld bead 3a and be further elongated on the main plate 1, as illustrated in Fig. 1(d). Beyond the gusset 2, the third weld bead 3c was elongated along the weld metal retaining member 4 placed in advance.

The weld beads around the gusset were formed by the above procedure to obtain a boxing welded joint as illustrated in Fig. 5. Such boxing welded joints were used as examples according to the present invention. Note that in some boxing welded joints, the second weld bead 3b and the third weld bead 3c were formed without placing the weld metal retaining member 4. These boxing welded joints were used as comparative examples.

Regarding the obtained boxing welded joints, the spacing M between the elongated second weld bead 3b and the elongated third weld bead 3c was measured at three positions, an average of the measured values (actual measured value) was found, and a difference between the average and the target value was calculated. The obtained results are also listed in the "Elongated weld bead spacing M" field of Table 2.

The spacing N of the elongated second weld bead 3b and the elongated third weld bead 3c was measured by a vernier caliper, and values thus obtained (actual measured values) are also listed in the "Elongated weld bead spacing N" field of Table 2.

A fatigue test was conducted on the obtained boxing welded joints. Note that the fatigue test was conducted at room temperature in the atmosphere under conditions of axial load control, a stress ratio of 0.1, and a frequency of 10 Hz, and thus a fatigue life was measured. The "axial load control" was set to "load applied direction: longitudinal direction of main plate". The "fatigue life" refers to the number of cycles of load application to a fatigue fracture. The obtained fatigue lives are shown in Table 2.

**[Table 2]**

| Boxing welded joint No. | Gusset | Weld metal retaining member | | | Elongated weld bead spacing M | | | Elongated weld bead spacing N | | Satisfy expression (1) M≤Q | Satisfy expression (2) 2.0≤M≤30.0 | Welded joint | Fatigue test result | | Remarks |
|---|---|---|---|---|---|---|---|---|---|---|---|---|---|---|---|
| | Short side of rectangular contact surface Q (mm) | M_{T} (mm) | N_{T} (mm) | θ (°) | Target (mm) | Average of actual measured values (mm) | Error (mm) | Target length (mm) | Length (actual measured value) (mm) | | | Elevation angle θ (actual measured value) (°) | Stress range (MPa) | Fatigue life (cycle) | |
| 1 | 14.0 | 10.0 | 200 | 60 | 10.0 | 10.1 | 0.1 | 15 | 15.3 | Satisfied | Satisfied | 59 | 100.0 | 2,490,464 | Example according to present invention |
| 2 | 9.0 | 6.0 | 100 | 45 | 6.0 | 6.1 | 0.1 | 15 | 15.2 | Satisfied | Satisfied | 42 | 100.0 | 2,775,462 | Example according to present invention |
| 3 | 6.0 | 4.0 | 50 | 30 | 4.0 | 4.1 | 0.1 | 15 | 15.6 | Satisfied | Satisfied | 29 | 100.0 | 2,367,984 | Example according to present invention |
| 4 | 4.0 | 2.0 | 20 | 0 | 2.0 | 2.1 | 0.1 | 15 | 15.3 | Satisfied | Satisfied | 28 | 100.0 | 2,238,145 | Example according to present invention |
| 5 | 14.0 | 10.0 | 200 | 60 | 10.0 | 10.5 | 0.5 | 30 | 30.5 | Satisfied | Satisfied | 58 | 100.0 | 2,322,582 | Example according to present invention |
| 6 | 14.0 | 10.0 | 200 | 60 | 10.0 | 10.2 | 0.2 | 50 | 50.1 | Satisfied | Satisfied | 55 | 100.0 | 2,212,998 | Example according to present invention |
| 10 | 14.0 | - | - | - | 10.0 | 8.3 | 1.7 | - | 10.6 | Satisfied | Satisfied | - | 100.0 | 2,045,789 | Comparative example |
| 11 | 9.0 | - | - | - | 7.0 | 5.1 | 1.9 | - | 7.3 | Satisfied | Satisfied | - | 100.0 | 1,962,489 | Comparative example |
| 12 | 6.0 | - | - | - | 4.0 | 0.7 | 3.3 | - | 4.6 | Satisfied | Not satisfied | - | 100.0 | 985,796 | Comparative example |
| 13 | 4.0 | - | - | - | 2.0 | 0.4 | 1.6 | - | 4.2 | Satisfied | Not satisfied | - | 100.0 | 912,413 | Comparative example |

In each of the examples according to the present invention, a difference between the actual measured value and the target value of the spacing M between the elongated second weld bead 3b and the elongated third weld bead 3c (i.e., the long side weld beads) is within 0.5 mm, and a good fatigue life was achieved. On the other hand, in the comparative examples in which the weld metal retaining member 4 was not used, a fatigue life is low. For example, in a comparative example (e.g., a boxing welded joint No. 13) in which a difference between the actual measured value and the target value of the spacing M between the long side weld beads is equal to or greater than 1.6 mm, a fatigue life is half or less of that of an example according to the present invention (a boxing welded joint No. 4) that uses the same target value of the spacing M as the comparative example.

### Reference Signs List

1 main plate
2 gusset (vertical plate)
2a rectangular contact surface of gusset
3 weld bead
3a first weld bead (short side weld bead)
3b second weld bead (long side weld bead)
3c third weld bead (long side weld bead)
4 weld metal retaining member
4a rectangular bottom surface of weld metal retaining member

## Claims

1. A boxing welding method for boxing welding a vertical plate onto a main plate by using a weld metal retaining member whose bottom surface that makes contact with the main plate is a rectangular bottom surface having a width M_{T}, the boxing welding method comprising:
forming a first weld bead along a short side of a rectangular contact surface where the vertical plate makes contact with the main plate so that the first weld bead is elongated beyond both sides of the short side of the rectangular contact surface on the main plate in a straight line parallel with the short side of the rectangular contact surface;
placing the weld metal retaining member adjacent to the first weld bead on the main plate;
sequentially forming a second weld bead and a third weld bead along long sides of the rectangular contact surface so that the second weld bead and the third weld bead cover end portions of the first weld bead and are further elongated along the weld metal retaining member on the main plate.

2. The boxing welding method according to claim 1, wherein
the second weld bead and the third weld bead are formed so as to satisfy the following expression (1) and the following expression (2): $M \leq Q$ $2.0 \leq M \leq 30.0$
where Q is a length (mm) of the short side of the rectangular contact surface, and M is a spacing (mm) between the second weld bead and the third weld bead.

3. The boxing welding method according to claim 1 or 2, wherein
a spacing N that is a shorter one of a spacing between the short side of the rectangular contact surface and a tip of the second weld bead and a spacing between the short side of the rectangular contact surface and a tip of the third weld bead is equal to or greater than 5.0 mm and equal to or less than 100.0 mm.

4. The boxing welding method according to any one of claims 1 to 3, wherein
the weld metal retaining member is a member that is not joined to a weld metal.

5. The boxing welding method according to claim 4, wherein
the weld metal retaining member is made of copper or made of a ceramic material.

6. The boxing welding method according to any one of claims 1 to 5, wherein
a longitudinal length N_{T} of the weld metal retaining member is 5 mm to 200 mm, and
a cross section of the weld metal retaining member that is orthogonal to a longitudinal direction has a trapezoidal shape whose bottom surface width M_{T} that is a width of the rectangular bottom surface that makes contact with the main plate is 2.0 mm to 30.0 mm.

7. The boxing welding method according to any one of claims 1 to 6, wherein
a region of a side surface of the weld metal retaining member that makes contact with an elongated long side weld bead on a cross section orthogonal to the longitudinal direction is a curved line or a straight line whose elevation angle θ from the rectangular bottom surface is equal to or less than 60°.

8. A boxing welded joint produced by boxing welding a vertical plate onto a main plate, comprising:
a first weld bead formed along a short side of a rectangular contact surface where the vertical plate makes contact with the main plate so as to be elongated beyond both sides of the short side of the rectangular contact surface on the main plate in a straight line parallel with the short side of the rectangular contact surface; and
a second weld bead and a third weld bead that are elongated long side weld beads formed along long sides of the rectangular contact surface so as to cover end portions of the first weld bead and be elongated on the main plate, wherein
an elevation angle θ from the main plate in regions where the elongated long side weld beads make contact with the main plate is equal to or less than 60° on cross sections of the elongated long side weld beads that are orthogonal to a longitudinal direction.

9. The boxing welded joint according to claim 8, wherein
the second weld bead and the third weld bead are formed so as to satisfy the following expression (1) and the following expression (2): $M \leq Q$ $2.0 \leq M \leq 30.0$
where Q is a length (mm) of the short side of the rectangular contact surface, and M is a spacing (mm) between the second weld bead and the third weld bead.

10. The boxing welded joint according to claim 8 or 9, wherein
a spacing N that is a shorter one of a spacing between the short side of the rectangular contact surface and a tip of the second weld bead and a spacing between the short side of the rectangular contact surface and a tip of the third weld bead is equal to or greater than 5.0 mm and equal to or less than 100.0 mm.
